# EUROPEAN PATENT SPECIFICATION

(11) **EP 0 775 438 B1**
(45) Date of publication and mention of the grant of the patent: **12.03.2003**
(21) Application number: 97200356.0
(22) Date of filing: 12.07.1993
(51) Int. Cl.: A01K 1/12, A01J 5/017, A01K 15/02

(54) **A milking box with an electro-shock device**
Melkbox mit Elektroschockgerät
Stalle de traite avec dispositif d'électrochocs

(30) Priority: 23.07.1992 NL 9201322
(43) Date of publication of application: 28.05.1997
(62) Divisional of application: 93202047.2
(73) Proprietor: C. van der Lely N.V., 3155 PD Maasland (NL)
(72) Inventor: van den Berg, Karel, 2971 BR Bleskensgraaf (NL); Bom, Cornelis Johannes Gerardus, 3181 VC Rozenburg (NL); Fransen, René, 3135 ZD Vlaardingen (NL)
(74) Representative: Corten, Maurice Jean F.M.

(56) References cited:
- EP-A- 0 323 444
- EP-A- 0 384 531

## Description

The invention relates to a milking box including an implement for automatically milking animals, such as cows, which comprises a milking robot, by means of which a milking cluster can be connected automatically to the teats of an animal's udder.

Such a milking box is known.

It is an object of the invention to force the animal to leave the milking box.

According to the invention this is achieved in that a side wall of the milking box includes a stop on which an electroshock device is arranged, the stop being positioned such that during at least a portion of the time the animal is in the milking box it is in contact with a portion of the animal. The electroshock device can be used to induce an animal to leave the milking box, when the animal is found to stay in the milking box after the exit door has opened.

In order to prevent that by means of the electroshock device other parts of the milking box are charged with electric current, the pivot shafts of the stops are insulated.

In accordance with a further feature of the invention, the milking box includes a computer with the aid of which control signals can be generated for the electroshock device, while there is furthermore provided an animal recognition system with the aid of which it can be checked whether or not an animal has left the milking box.

The invention furthermore relates to a method for removing an animal from a milking box whereby, when the animal is treated in the milking box an exit door is opened, whereafter it is checked, by means of an animal recognition system, whether the animal has left the milking box and whereby, if after some time has elapsed it is found that the animal is still in the milking box, a control signal is generated with the aid of which an electric shock device is triggered whereafter the animal receives an electroshock.

For a better understanding of the invention and to show how the same may be carried into effect, reference will now be made, by way of example, to the accompanying drawings, in which:
Figure 1 is a plan view of the milking box including a cleaning device for cleaning the floor of the milking box;
Figure 2 is a side view of the cleaning device shown in Figure 1;
Figure 3 is, to an enlarged scale, a view of a portion of the dung scraper of Figure 2;
Figure 4 is a plan view of the dung scraper, taken in the direction of the arrow IV in Figure 3;
Figure 5 is, like Figure 3, a side view of the dung scraper, the difference being that the dung scraper is moved in the opposite direction.

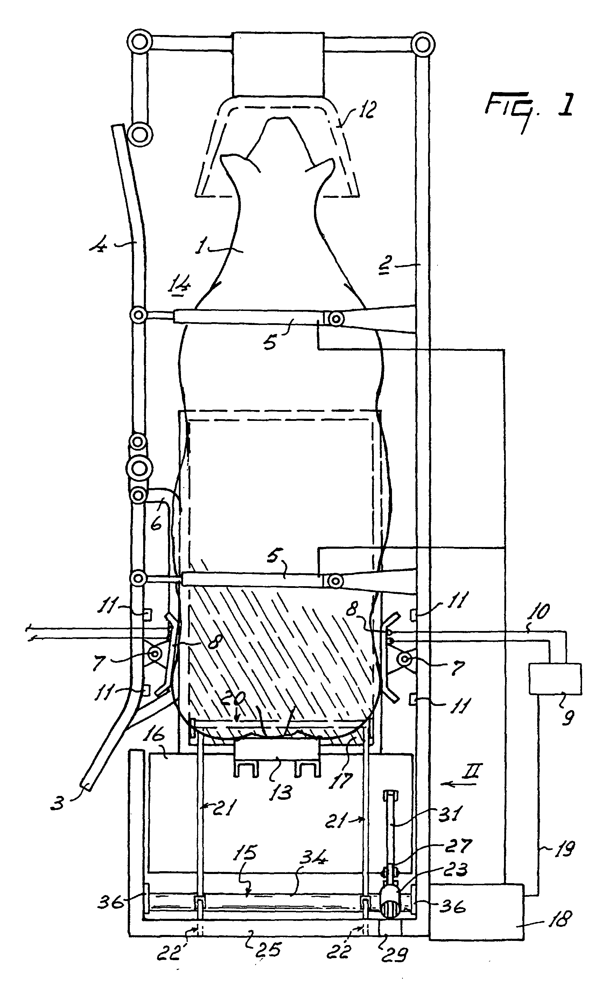

Figure 1 is a plan view of a cow 1 in a milking box 2, which has an entrance door 3 and an exit door 4 for allowing the cow 1 to enter and to leave same. Operating cylinders 5, disposed between the doors and a further portion of the frame of the milking box 2, are present for controlling the entrance door 3 and the exit door 4. Near its bottom side, the entrance door 3 includes a slanting portion 6 which curves towards the centre of the milking box 2. The curving portion 6 of the entrance door bounds the area in which the hind legs of the cow 1 can stand, so that the cow 1 has her hind legs in a defined position. On the entrance door 3 and the facing side of the frame of the milking box 2 there are provided stops 8 which are pivotal about predominantly vertical shafts 7 and, after closing of the entrance door 3, bear on a relevant side of the cow 1. An electroshock device 9 is connected to the stops 8 by means of an electric lead 10. The stops 8 can be charged with electric current by means of the electroshock device 9. To prevent other portions of the milking box 2 from also being charged, the pivot shafts 7 of the stops 8 are insulated and the angle through which the stops 8 can be pivoted about the shafts 7 is limited by limiting elements 11, which are also insulated.

Near the leading side of the milking box 2 there is arranged a feed trough 12, in which food can be supplied to the cow 1 during her stay in the milking box 2. At some distance from the rear side of the milking box 2 there is arranged a partition 13 on the floor 14 of the milking box 2. The partition 13 extends parallel to the rear side of the milking box 2 and bounds the dwelling area of the cow 1 in the milking box 2 at the rear side. The width of the partition 13 amounts to approximately 1/3 of the width of the milking box 2.

A cleaning device 15 is accommodated in the space between the partition 13 and the rear side of the milking box 2. In addition, the floor 14 of the milking box 2 accommodates a slurry cellar 16, which extends in the longitudinal direction of the milking box 2 to near the centre of the milking box 2. In the place where the animal stands in the milking box 2, the slurry cellar is covered by a grid 17 which is flush with the floor 14 and includes bars which extend at an angle relative to the longitudinal direction of the milking box 2.

A computer 18 is arranged near the rear side of the milking box 2 against the side edge of the frame. By means of the computer 18, control signals can be generated for controlling the electroshock device 9, the cleaning device 15 and the operating cylinders 5. The computer 18 applies the control signals to the relevant control members via the electric lines 19.

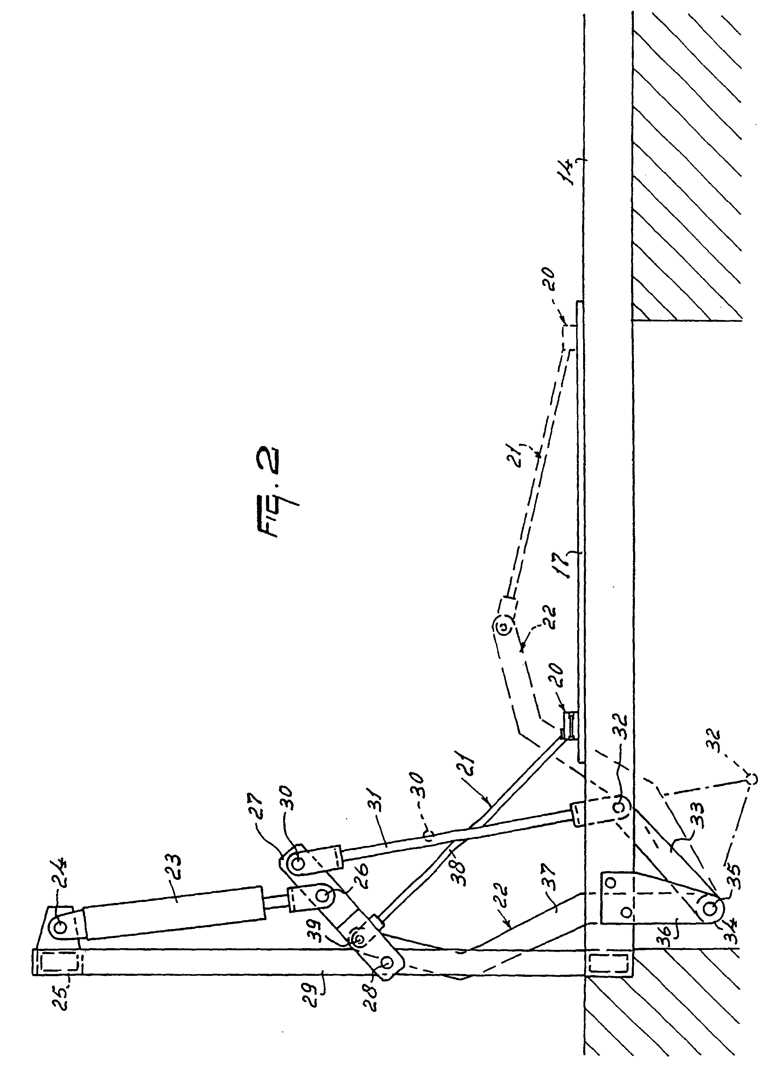

As is shown in Figure 2, the cleaning device 15 is provided with a dung scraper 20 which is reciprocated over the grid 17 with the aid of a control mechanism 21. The control mechanism 21 comprises a rod system 22 and an operating member 23. The operating member 23 is designed, in this embodiment, as a pneumatic operating cylinder. The operating cylinder 23 has one end pivotably connected to a horizontal shaft 24 arranged at an upper beam 25 of the frame of the milking box 2 and its other end pivotably connected to a further horizontal shaft 26, which is disposed on a first arm 27 of the rod system 22.

The first arm 27 has one end pivotably connected to an upright 29 of the frame of the milking box 2. An intermediate rod 31 is connected to the other end of the first arm 27 in such a manner that it is pivotal about a horizontal shaft 30. The intermediate rod 31 has its other end rotatably connected to a horizontal shaft 32 disposed on the end of a second arm 33 of the rod system 22. The second arm 33 is rigidly connected by means of its other end to a tube 34. The tube 34 is rotatable about a horizontal shaft 35 which is secured under the floor 14 of the milking box 2 and near the rear end of the milking box 2 to the floor 14 by means of supports 36. The tube 34, which extends through the width of the slurry cellar 16, is provided with two spaced apart strips 37. The strips 37 extend in a straight line from the tube 34 and then merge into a V-shaped portion. Connected to each of the V-shaped ends of the strips 37 there is a control rod 38 which is pivotal about a horizontal shaft 39. The two spaced-apart control rods 38 have their other ends rigidly connected to a tube 40 of the dung scraper 20 (Figure 4). Each end of the tube 40 is provided with a strip-like lever arm 41, on which a stub axle 42 is perpendicularly disposed (see Figures 3 to 5). The stub axles 42 are each inserted through an upright side wall 43 of a guide member 44. The stub axles 42 are slidable along a slotted hole 45 which extends horizontally in the side wall 43. The two side walls 43 of the guide member 44 are rigidly interconnected by a small horizontal box-like beam 46. The side walls 43 each include, arranged near their lower side, a strip 47 which is arranged at a square angle and co-operates with a rail 48 provided on the floor 14 of the milking box 2. The rail 48 is formed as a turned-over U-profile.

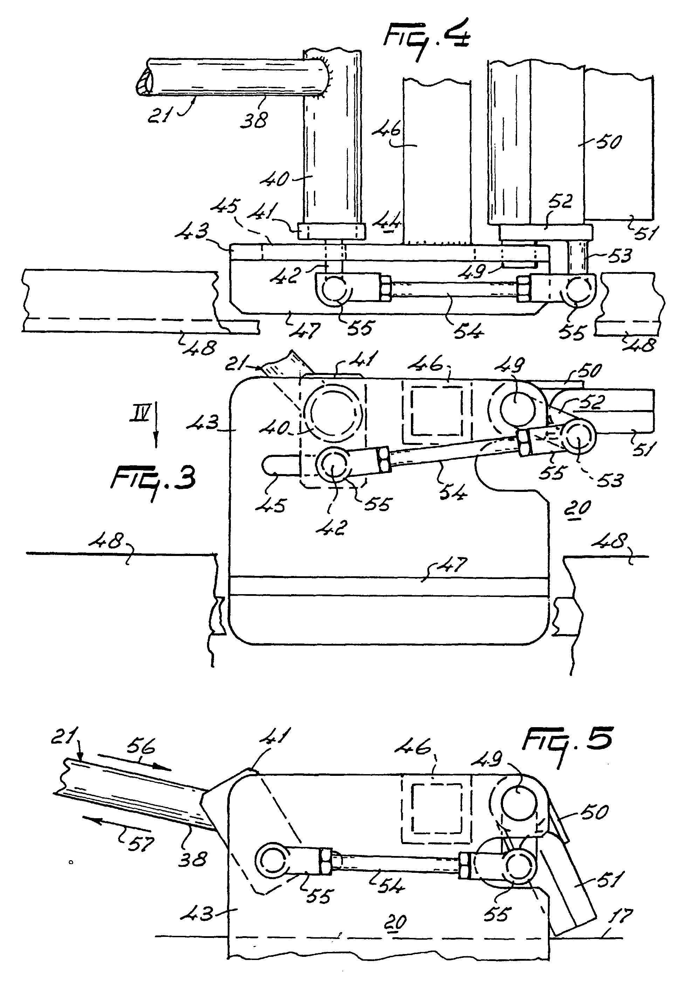

Between the side walls 43 there is arranged a rotatable shaft 49, on which two spaced-apart parallel strips 50 are disposed (Figure 5). A flexible wiper 51 is clamped between the two parallel strips 50. The flexible wiper 51 is preferably made of rubber. A strip-like lever arm 52 is disposed at some distance from each end of the shaft 49. Near the free end of the lever arm 52 there is arranged a stub axle 53 which extends perpendicularly to the lever arm 52. By means of an intermediate rod 54, the stub axle 53 is coupled to the stub axle 42. The intermediate rod 54 disposed between the two lever arms 41 and 52 is provided at both ends with ball joints 55. The length of the intermediate rod 54 can be adjusted by rotating the ball joints 55 about the intermediate rod 54.

The mode of operation of the dung scraper 20 will now be described in greater detail with reference to Figures 2 to 5.

After an animal has been treated in the milking box 2, the exit door 4 is opened, whereafter the animal can leave the milking box 2. By means of a (non-shown) cow recognition system it can be checked whether the animal has indeed left the milking box 2. If after some time has elapsed it is found that the animal is still in the milking box 2, the computer 18 supplies a control signal, with the aid of which the electroshock device 9 is triggered. The animal then receives via the stops 11 an electric shock, which induces her to leave the milking box.

As soon as the milking box 2 is empty, the computer 18 applies a control signal to the cleaning device 15, whereafter the operating member 23 is energized. This results in the first arm 27 being pivoted downwardly about the horizontal shaft 28, whilst the control rods 38 are pushed forwards by the strips 37, which is illustrated in Figure 2 by arrow 56. During the first part of the motion of the control rod 38, the dung scraper is not moved along the rail 48. During said part of this motion, the tube 40 slides in the slotted hole 45 by means of its stub axles 42 from the position shown in Figure 5 to the position shown in Figure 3. During sliding of the tube 40 along the slotted holes 45, the flexible wiper 51 is pivoted upwardly by rotation of the shaft 49 (Figure 3). When the stub axles 42 are in abutment with the end of the slotted holes 45, the dung scraper 20 is carried along by the control rod 38 in the direction indicated by the arrow 56. The dung scraper 20 is moved along the rail 48 to as far as the end of the grid 17, as is illustrated in Figure 2 by means of broken lines. Thereafter the computer 18 again applies a control signal to the cleaning device 15, whereafter the operating member 23 moves the control rod 38 in the direction of the arrow 57 (Figures 3, 5). During the first part of the travel of the control rod 38 in the direction of arrow 57, the flexible wiper 51 is pivoted downwardly until the stub axles 42 arrive at the other end of the slotted hole 45. In this position, the end of the flexible wiper 51 bears on the grid 17 of the floor 14. Thereafter the dung scraper 20 is moved by the control rod 38 in the direction indicated by the arrow 57. This causes the flexible wiper 51 to push dung lying on the grid 17 to between the bars of the grid 17, whereafter the dung drops into the slurry cellar 16. Should there be a great deal of dung on the grid 17, the dung scraper 20 can again be reciprocated thereover.

After the grid 17 has been cleaned, the entrance door 3 can be opened, whereafter an other animal can enter the milking box 2.

## Claims

1. A milking box (2) including an Implement for automatically milking animals, such as cows, which comprises a milking robot by means of which a milking cluster can be connected automatically to the teats of the animal's udder, **characterized in that** a side wall of the milking box (2) includes a stop (8) on which an electroshock device (9) is arranged, the stop (8) being positioned such that during at least a portion of the time the animal (1) is in the milking box (2) it is in contact with a portion of the animal (1).

2. A milking box according to claim 1, **characterized in that** a first stop (8) is provided at an entrance door (3) of the milking box (2).

3. A milking box according to claim 1 or 2, **characterized in that** a second stop (8) is provided at the facing side of the frame of the milking box (2).

4. A milking box according to claim 1, 2, or 3, **characterized in that** the stop (8) is pivotable about a predominantly vertical shaft (7).

5. A milking box according to claim 4, **characterized in that** the pivot shaft (7) is insulated.

6. A milking box according to any one of the preceding claims, **characterized in that** the angle through which the stop (8) can be pivoted about the shaft (7) is limited by a limiting element (11), which is insulated.

7. A milking box accordant to any one of the preceding claims, **characterized in that** the milking box (2) includes a computer (18), with the aid of which control signals can be generated for the electroshock device (9).

8. A milking box according to any on of the preceding claims, **characterized in that** the milking box (2) comprises an animal recognition system.

9. A method for removing an animal from a milking box (2), whereby when the animal is treated in the milking box (2), an exit door is opened, whereafter it is checked, by means of an animal recognition system, whether the animal has left the milking box and whereby, if after some time has elapsed it is found that the animal is still in the milking box (2), a control signal is generated, with the aid of which an electroshock device (9) is triggered whereafter the animal receives an electric shock.

## Patentansprüche

1. Melkbox (2) mit einer Vorrichtung zum automatischen Melken von Tieren, wie z. B. Kühen, die einen Melkroboter umfaßt, mittels dessen ein Melkgeschirr automatisch an die Zitzen des Tiereuters angeschlossen werden kann,
**dadurch gekennzeichnet, daß** eine Seitenwand der Melkbox (2) einen Anschlag (8) aufweist, an dem eine Elektroschock-Vorrichtung (9) angeordnet ist, wobei der Anschlag (8) derart positioniert ist, daß er zumindest während eines Teiles der Aufenthaltsdauer des Tieres (1) in der Melkbox (2) mit einem Teil des Tieres (1) in Kontakt steht.

2. Melkbox nach Anspruch 1,
**dadurch gekennzeichnet, daß** ein erster Anschlag (8) an einer Eingangstür (3) der Melkbox (2) angeordnet ist.

3. Melkbox nach Anspruch 1 oder 2,
**dadurch gekennzeichnet, daß** ein zweiter Anschlag (8) an der gegenüberliegenden Seite des Rahmens der Melkbox (2) angeordnet ist.

4. Melkbox nach Anspruch 1, 2 oder 3,
**dadurch gekennzeichnet, daß** der Anschlag (8) um eine überwiegend vertikale Achse (7) schwenkbar ist.

5. Melkbox nach Anspruch 4,
**dadurch gekennzeichnet, daß** die Schwenkachse (7) isoliert ist.

6. Melkbox nach einem der vorhergehenden Ansprüche,
**dadurch gekennzeichnet, daß** der Winkel, über den der Anschlag (8) um die Achse (7) geschwenkt werden kann, durch ein Begrenzungselement (11) begrenzt ist, welches isoliert ist.

7. Melkbox nach einem der vorhergehenden Ansprüche,
**dadurch gekennzeichnet, daß** die Melkbox (2) einen Computer (18) enthält, mittels dessen Steuersignale für die Elektroschock-Vorrichtung (9) erzeugt werden können.

8. Melkbox nach einem der vorhergehenden Ansprüche,
**dadurch gekennzeichnet, daß** die Melkbox (2) ein Tiererkennungssystem umfaßt.

9. Verfahren zum Entfernen eines Tieres aus einer Melkbox (2), wobei nach dem Behandeln des Tieres in der Melkbox (2) eine Ausgangstür geöffnet wird, worauf mittels eines Tiererkennungssystems geprüft wird, ob das Tier die Melkbox verlassen hat, und wobei, wenn nach Verstreichen einiger Zeit festgestellt wird, daß sich das Tier noch in der Melkbox (2) befindet, ein Steuersignal erzeugt wird, mittels dessen eine Elektroschock-Vorrichtung (9) aktiviert wird, worauf das Tier einen Elektroschock erhält.

## Revendications

1. Stalle de traite (2) comprenant un dispositif pour traire automatiquement des animaux, tels que des vaches, qui comprend un robot de traite à l'aide duquel un groupe de traite peut être relié automatiquement aux rayons du pis de l'animal, **caractérisé en ce qu'**une paroi latérale de la stalle de traite (2) comprend une butée (8) sur laquelle un dispositif d'électrochoc (9) est agencé, la butée (8) étant positionnée de telle sorte que, pendant au moins une partie de la durée pendant laquelle l'animal (1) se trouve dans la stalle de traite (2), elle se trouve en contact avec une partie de l'animal (1).

2. Stalle de traite selon la revendication 1, **caractérisée en ce qu'**une première butée (8) est prévue à une porte d'entrée (3) de la stalle de traite.

3. Stalle de traite selon la revendication 1 ou 2, **caractérisée en ce qu'**une deuxième butée (8) est prévue du côté opposé de l'ossature de la stalle de traite (2).

4. Stalle de traite selon la revendication 1, 2 ou 3, **caractérisée en ce que** la butée (8) peut pivoter sur un axe (7) principalement vertical.

5. Stalle de traite selon la revendication 4, **caractérisée en ce que** l'axe de pivot (7) est isolé.

6. Stalle de traite selon l'une quelconque des revendications précédentes, **caractérisée en ce que** l'angle selon lequel la butée (8) peut pivoter autour de l'axe (7) est limité par un élément limiteur (11), qui est isolé.

7. Stalle de traite selon l'une quelconque des revendications précédentes, **caractérisée en ce que** la stalle de traite (2) comprend un ordinateur (18), à l'aide duquel des signaux de commande peuvent être générés pour le dispositif d'électrochoc (9).

8. Stalle de traite selon l'une quelconque des revendications précédentes, **caractérisée en ce que** la stalle de traite (2) comprend un système de reconnaissance des animaux.

9. Procédé pour retirer un animal d'une stalle de traite (2), dans lequel lorsque l'animal est traité dans la stalle de traite (2), une porte de sortie est ouverte, après quoi il est vérifié, à l'aide d'un système de reconnaissance des animaux, si l'animal a quitté la stalle de traite, et dans lequel, si au bout d'un certain temps, il est découvert que l'animal est toujours dans la stalle de traite (2), un signal de commande est généré, à l'aide duquel un dispositif d'électrochoc (9) est déclenché, après quoi l'animal reçoit un choc électrique.
